# EUROPEAN PATENT APPLICATION

(11) **EP 4 339 348 A1**
(43) Date of publication of application: **20.03.2024**
(21) Application number: 22806407.7
(22) Date of filing: 13.04.2022
(51) Int. Cl.: D06F 34/05, D06F 39/02, D06F 34/14, D06F 105/42

(54) **LAUNDRY TREATMENT APPARATUS AND METHOD FOR CONTROLLING REMOTE CONTROL TERMINAL BY USING SAME**

(30) Priority: 10.05.2021 CN 202110505287
(71) Applicant: Qingdao Haier Washing Machine Co., Ltd., Qingdao, Shandong 266101 (CN); HAIER SMART HOME CO., LTD., Laoshan District Qingdao Shandong 266101 (CN)
(72) Inventor: ZHANG, Shuxia, Qingdao, Shandong 266101 (CN); HUANG, Zhenxing, Qingdao, Shandong 266101 (CN); XU, Sheng, Qingdao, Shandong 266101 (CN)
(74) Representative: Beck & Rössig European Patent Attorneys
(86) International application number: PCT/CN2022/086494
(87) International publication number: WO 2022/237437

(57) **Abstract**

A clothing treatment device (100) and a method of controlling a remote-control terminal, the clothing treatment device (100) comprising a main control board (104), a contactless payment selection unit (101), and a communication unit (103); the contactless payment selection unit (101) is connected to the main control board (104) for turning on and off an APP on the remote-control terminal for controlling the clothing treatment device (100) with a contactless payment function; the main control board (104) obtains a signal to turn on and off the contactless payment function and sends the signal to the remote-control terminal via the communication unit (103).

## Description

### TECHNICAL FIELD

The present disclosure belongs to the field of household appliances and, specifically, relates to a clothing treatment device and a method for controlling a remote-control terminal.

### BACKGROUND

At present, with the continuous development of IoT technology, the contactless payment function is applied in various industries, which brings great convenience to users.

However, both turning on and off the concactless payment feature needs to be done on a smartphone, which definitely reduces the flexibility of controlling the feature.

In view of this the present disclosure is hereby proposed.

### SUMMARY

The technical problem to be solved by the present disclosure is to overcome the deficiencies of the prior art, and provide a clothing treatment device, by providing a contactless payment selection unit on the clothing treatment, the user can turn on or off the contactless payment function to an APP capable of controlling the clothing treatment device on a remote-control terminal by triggering or not triggering the contactless payment selection unit, so as to provide convenience for the user.

In order to solve the above technical problems, the basic idea of the technical solution adopted in the present disclosure is:
a clothing treatment device including a main control board, a contactless payment selection unit, and a communication unit;
the contactless payment selection unit is connected to the main control board for turning on and off a contactless payment function of an APP on the remote-control terminal that controls the clothing treatment device;
the main control board acquires a signal from the contactless payment selection unit to turn on and off the contactless payment function and sends the signal to the remote-control terminal via the communication unit.

Further, a control panel is included, the contactless payment selection unit being provided on the control panel.

Further, a display unit is included for indicating whether the contactless payment selection unit has been triggered;
preferably, the display unit is provided around the contactless payment selection unit.

Further, the main control board has a function of storing that the contactless payment selection unit has been triggered.

Further, the contactless payment selection unit is a button.

Further, it also includes
a detergent automatic delivering device being provided with a detergent reservoir for automatically dispensing detergent into a clothing treatment drum of the clothing treatment device;
a detergent residual detection unit for detecting a detergent residual in the detergent reservoir and the main control board sends a signal of the detergent residual in the detergent reservoir to the remote-control terminal via the communication unit, so as the remote-control terminal to automatically generate an order for purchasing detergent in accordance with the signal of the detergent residual;
when the contactless payment selection unit is triggered, a signal that the contactless payment function is turned on is sent to the remote-control terminal via the communication unit, so that the order for purchasing detergent automatically generated by the remote-control terminal is paid contactlessly; when the contactless payment selection unit is not triggered, a signal that the contactless payment function is turned off is sent to the remote-control terminal via the communication unit, so that the order for purchasing detergent automatically generated order for purchasing detergent cannot be paid contactlessly.

A method of controlling a remote-control terminal using a clothing treatment device as described above, performed at the remote-control terminal, comprising the steps of:
obtaining a signal that the detergent balance is low;
generating an order to purchase detergent;
obtaining a signal whether the contactless payment selection unit is triggered, if yes, generating an order to purchase detergent with contactless payment, if no, generating a reminder message of insufficient detergent balance.

Further, generating an order for purchasing the detergent comprises the following steps:
obtaining a volume of the detergent reservoir in the clothing treatment device, a ratio of a total net content of detergent in the order for purchasing detergent to the volume of the detergent reservoir in the clothing treatment device is in a range of 0.8 to 1.2.

Further, generating an order for purchasing the detergent comprises the following steps:
obtaining a mounting structure of the detergent reservoir in the clothing treatment device, generating the order for purchasing detergent in which the mounting structure of the detergent reservoir matches the mounting structure of the detergent reservoir in the clothing treatment device;
wherein the detergent reservoir in the clothing treatment device is of a single-use type.

The method of controlling a remote-control terminal using a clothing treatment device as described above, performed at the local end of the clothing treatment device, comprising the steps of:
obtaining a signal that the detergent balance is low;
a signal of insufficient detergent balance is sent to the remote-control terminal to enable the remote-control terminal to generate the order for the purchase of detergent; determining whether the contactless payment selection unit is triggered, if yes, sending the signal that the contactless payment selection unit is triggered to the remote-control terminal so that the order for purchasing detergent to be paid contactlessly, if not, sending a signal that the contactless payment selection unit is not triggered to the remote-control terminal so that the remote-control terminal to generate the reminder message of insufficient detergent balance.

After adopting the above technical solution, the present disclosure has the following beneficial effects compared with the prior art.
1. The present disclosure provides convenience for the user by setting a contactless payment selection unit on the clothing treatment, so that the user can turn on or off the contactless payment function to the APP on the remote-control terminal that is capable of controlling the clothing treatment device by triggering or not triggering the contactless payment selection unit, especially for some users who are not good at operating the APP on the remote-control terminal.
2. The present disclosure sets the contactless payment selection unit on the control panel, so that the contactless payment selection unit on the clothing treatment device has a clearer goal for the user and is more convenient to operate.
3. The present disclosure enables the main control board to store the signal triggered by the contactless payment selection unit, so that the decision to trigger or not to trigger the contactless payment selection unit can only be made by the user, avoiding the inconvenience to the user due to the closure of the contactless payment function caused by the power failure of the clothing treatment device.

Specific embodiments of the disclosure are described in further detail below in conjunction with the accompanying drawings.

### BRIEF DESCRIPTION OF DRAWINGS

The accompanying drawings are used as part of the present disclosure to provide a further understanding of the disclosure, and the schematic embodiments of the disclosure and their illustrations are used to explain the disclosure but do not constitute an undue limitation of the disclosure. Obviously, the accompanying drawings in the following description are only some of the embodiments, and other accompanying drawings may be obtained on the basis of these drawings for a person of ordinary skill in the art without creative labor. In the accompanying drawings:
FIG. 1 is a schematic diagram of the clothing treatment device of the present disclosure;
FIG. 2 is a flowchart of a method of controlling a remote-control terminal using a clothing treatment device in one embodiment of the present disclosure;
FIG. 3 is a flow diagram of a method of controlling a remote-control terminal using a clothing treatment device in another embodiment of the present disclosure.

In the figure: 100, clothing treatment device; 101, contactless payment selection unit; 102, detergent automatic delivering device; 103, communication unit; 104, main control board; 105, display unit; 200, remote-control terminal.

It is to be noted that these accompanying drawings and textual descriptions are not intended to limit in any way the scope of the present disclosure as conceived, but rather to illustrate the concepts of the disclosure for those skilled in the art by reference to particular embodiments.

### DETAILED DESCRIPTION

In order to make the objects, technical solutions and advantages of the embodiments of the present disclosure clearer, the technical solutions in the embodiments will be described clearly and completely in the following in conjunction with the accompanying drawings in the embodiments of the present disclosure, and the following embodiments are used to illustrate the present disclosure but are not used to limit the scope of the present disclosure.

In the description of the present disclosure, it is to be noted that the terms "top", "bottom", "front", "back", "left", "right", "vertical", "inner", "outer " and the like indicate orientations or positional relationships based on those shown in the accompanying drawings, and are intended only to facilitate the description of the present disclosure and to simplify the description, and are not intended to indicate or imply that the device or element referred to must have a particular orientation, be constructed and operated with a particular orientation, and therefore are not to be construed as a limitation of the present disclosure.

In the description of the present disclosure, it is to be noted that, unless otherwise expressly specified and limited, the terms "mounted", "connected", "connected" are to be understood in a broad sense, e.g., it may be a fixed connection, a removable connection, or a connection in one piece; it may be a mechanical connection or an electrical connection; it may be a direct connection or an indirect connection through an intermediate medium. For those of ordinary skill in the art, the specific meaning of the above terms in the context of the present disclosure may be understood in specific cases.

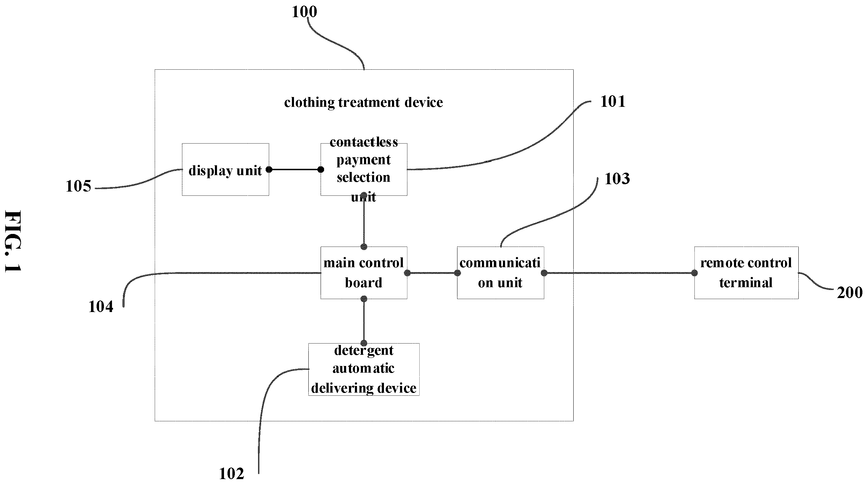

As shown in FIGS. 1 to 3, the present disclosure provides a clothing treatment device and a method for controlling a remote-control terminal using it.

As shown in FIG. 1, the clothing treatment device 100 includes a main control board 104, a contactless payment selection unit 101, and a communication unit 103.

The main control board 104 is a controller of the clothing treatment device 100 for controlling the operating program of the clothing treatment device 100. The contactless payment selection unit 101 is used to turn on and off the contactless payment function of the APP on the remote-control terminal 200 controlling the clothing treatment device 100. The communication unit 103 serves to enable wireless communication of signals between the main control board 104 and the remote-control terminal 200.

The contactless payment selection unit 101 is connected to the main control board 104, and when the contactless payment selection unit 101 is triggered, the triggered signal is sent to the main control board 104, so that the main control is able to know that the contactless payment selection unit 101 has been triggered, and then the signal can be sent to the remote-control terminal 200 via the communication unit 103. When the contactless payment selection unit 101 is not triggered, the main control board 104 does not receive the triggered signal, i.e., the signal that the contactless payment selection unit 101 has not been triggered is sent to the remote-control terminal 200 via the communication unit 103.

By means of the above-described settings, it can be realized that when the contactless payment selection unit 101 on the clothing treatment device 100 is triggered, the order generated by the remote-control terminal 200 can be paid contactlessly, and the completed order will be transferred to a subsequent link, for example, delivery, and so on. When the contactless payment selection unit 101 on the clothing treatment device 100 is not triggered, the order generated by the remote-control terminal 200 is not able to be contactlessly paid, but the generated order is informed to the user in the form of a prompt message, and the user manually completes the payment on his own, and after completing the order, the order is transferred to the subsequent links.

In the above-described scheme, when a user wants to turn off the contactless payment function in the APP for controlling the clothing treatment device 100 in the remote-control terminal 200, the user only needs to set the contactless payment selection unit 101 on the clothing treatment device 100 in a state that has not been triggered, without having to set it up in the APP of the remote-control terminal 200, and vice versa. This greatly improves the user experience, especially for some users who are not good at operating the APP of the remote-control terminal 200, and solves the problem that a series of complicated operations need to be carried out in the remote-control terminal to realize the contactless payment function when it is turned on or off in the prior art.

In a further embodiment, the clothing treatment device 100 further comprises a control panel, and the contactless payment selection unit 101 is provided on the control panel. The above embodiment makes the contactless payment selection unit 101 on the clothing treatment device 100 more targeted and easier to operate for the user.

In a further embodiment, the clothing treatment device 100 further comprises a display unit 105 for indicating whether the contactless payment selection unit 101 has been triggered.

In detail, the display unit 105 is capable of displaying the state in which the contactless payment selection unit 101 has been triggered or not, so as to be known to the user. Preferably, the display unit 105 is a light, and the light lights up when the contactless payment selection unit 101 is triggered, and the light does not light up when the contactless payment selection unit 101 is not triggered.

In a further embodiment, the display unit 105 is provided around the contactless payment selection unit 101.

It will be understood that the contactless payment selection unit 101 as well as the display unit 105 can only be operated and displayed when the clothing treatment device 100 is in a powered state.

In a further embodiment, the main control board 104 is capable of memorizing a signal that the contactless payment selection unit 101 has been triggered, and when the contactless payment selection unit 101 has been triggered once, the light is on. Then when the clothing treatment device 100 is powered off and then powered on again, the contactless payment selection unit 101 remains in the triggered state without receiving further operation from the user, i.e., the light will still be on.

In the above embodiment, the decision to trigger or not to trigger the contactless payment selection unit 101 can be made only by the user, avoiding inconvenience to the user due to the shutdown of the contactless payment function caused by the power failure of the clothing treatment device 100.

In some embodiments of the present disclosure, the clothing treatment device 100 further comprises an detergent automatic delivering device 102, the detergent automatic delivering device 102 being provided with a detergent reservoir for automatically dispensing detergent into the clothing treatment drum of the clothing treatment device 100.

The clothing treatment device 100 further comprises a detergent residual detection unit for detecting a detergent residual in the detergent reservoir and the main control board 104 sending a detergent residual signal in the detergent reservoir to the remote-control terminal 200 via the communication unit 103, so as the remote-control terminal 200 to automatically generate an order for the purchase of a detergent based on the detergent residual signal.

When the contactless payment selection unit 101 is triggered, a signal that the contactless payment function is turned on is sent to the remote-control terminal 200 via the communication unit 103, so that the order for purchasing detergent automatically generated by the remote-control terminal 200 is paid contactlessly. When the contactless payment selection unit 101 is not triggered, a signal that the contactless payment function is turned off is sent to the remote-control terminal 200 via the communication unit 103, so that the order for purchasing detergent automatically generated by the remote-control terminal 200 cannot be paid for contactlessly.

The above solution enables the user to flexibly control whether or not an automated detergent purchase order is paid for contactlessly.

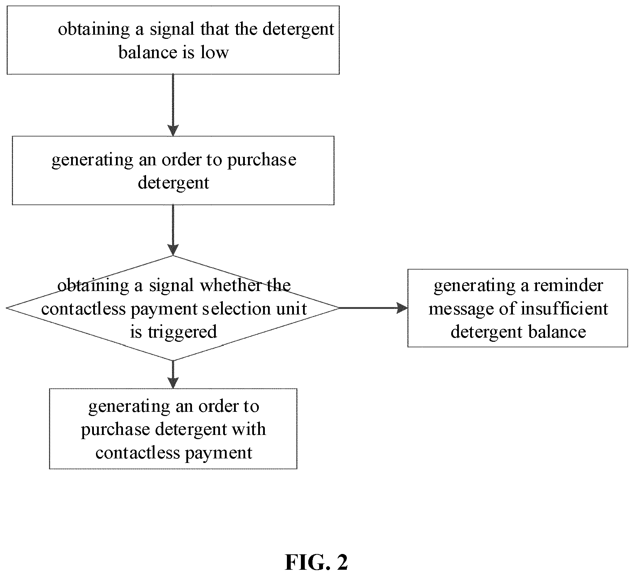

The present disclosure provides a method of controlling a remote-control terminal using a clothing treatment device as described above to be executed at a remote-control terminal, comprising the following steps, as shown in FIG. 2:
obtaining a signal that the detergent balance is low;
generating an order to purchase detergent;
obtaining a signal whether the contactless payment selection unit 101 has been triggered, if yes, generating an order for purchasing detergent by contactless payment, if no, generating a reminder message that the detergent balance is insufficient.

In detail, when the remaining amount of detergent in the detergent reservoir in the clothing treatment device 100 is insufficient, for example, when the remaining amount is 5% to 10% of the total amount, a signal that the remaining amount of detergent is insufficient is sent to an APP of the remote-control terminal 200, and an order for purchasing detergent is automatically generated by the APP of the remote-control terminal 200 after obtaining the signal that the remaining amount of detergent is insufficient. Then, the remote-control terminal 200 sends an instruction to the local terminal of the clothing treatment device 100 to confirm that the contactless payment selection unit 101 has been triggered, and if the contactless payment selection unit 101 has been triggered, the main control board 104 of the clothing treatment device 100 sends the signal that the contactless payment selection unit 101 has been triggered back to the APP of the remote-control terminal 200, and the APP of the remote-control terminal 200, after receiving the signal, automatically pays for the order that has been generated previously without any sensing, whereupon the order is completed and enters into the subsequent process, such as delivery, signing for receipt, and the like.

If the contactless payment selection unit 101 is not triggered, the main control board 104 of the clothing treatment device 100 feeds back the signal that the contactless payment selection unit 101 is not triggered to the APP of the remote-control terminal 200, and when the APP of the remote-control terminal 200 receives this signal, it does not make a payment for the previously generated order, but instead informs the user of the generated order in the form of a reminder message to have the user to manually and autonomously complete the payment.

It is to be noted that the liquid storage box of the clothing treatment equipment 100 is provided with identification labels such as a QR code or an NFC label, so that the user can scan the QR code or touch the NFC label using a cell phone with an NFC recognition function to enter the interface for purchasing detergents when purchasing detergents suitable for the clothing treatment equipment 100 for the first time, the first time the user is required to manually place an order, and the user sets up a delivery address after placing the order the contactless payment method after placing the order. After the order is completed, the type of detergent purchased, as well as the delivery address and contactless payment method are stored in the remote-control terminal 200 of the smartphone, tablet, etc. When subsequent orders are generated, the information in the first order can be retrieved to complete the order.

In some embodiments of the present disclosure, generating an order for purchasing detergent comprises the steps of obtaining a volume of a detergent reservoir in the clothing treatment device 100, and generating a ratio of the total net content of detergent in the order for purchasing detergent to the volume of the detergent reservoir in the clothing treatment device 100 in a range of 0.8 to 1.2.

In detail, after the APP of the remote-control terminal 200 is set with the function of automatically generating an order for purchasing detergent, the detergent can be purchased in a timely manner, so that the user does not have to hoard the detergent at home, saving the space occupied by hoarding the detergent, and furthermore, the user can also be enabled to use the detergent with a newer date of production, ensuring the detergent's effect of caring for the clothes. Therefore, the present disclosure further discloses that the volume of the detergent reservoir is to be obtained when generating the order, and the total net content of the detergent in the order should match the volume of the detergent reservoir.

Obviously, the above scheme is applied to call the state of detergent out of stock in the first order when generating the order, and when the detergent in the first order is in stock, the order is prioritized to purchase the detergent stored in the first order.

And when the detergent in the first order is out of stock, an order should be placed for the same type of detergent, then, when purchasing the same type of detergent, it should be ensured that the total net content of the detergent in the order matches the volume of the detergent reservoir.

In some other embodiments of the present disclosure, generating an order for purchasing detergent comprises the steps of: obtaining an installation structure of a detergent reservoir in the clothing treatment device 100, and generating an order for purchasing detergent in which the installation structure of the detergent reservoir matches the installation structure of the detergent reservoir in the clothing treatment device 100; wherein the detergent reservoir in the clothing treatment device 100 is of a single-use type.

In detail, the detergent reservoir in this embodiment is a disposable reservoir, and the detergent automatic delivering device 102 is provided with a reservoir installation chamber in which the reservoir is installed, and a detergent outlet top-opening portion is provided in the installation chamber to open the detergent outlet on the reservoir, so that the detergent outlet is closed by an aluminum film or the like when the reservoir is not installed in the installation chamber, and the top-opening portion will open the detergent outlet to the aluminum film when the reservoir is installed in the installation chamber, so that the liquid reservoir is connected to the delivery line of the automatic detergent delivery device 102.

Therefore, when generating an order for the purchase of a detergent reservoir, the mounting structure of the detergent reservoir should be obtained first to avoid that the purchased detergent reservoir cannot be mounted into the mounting chamber.

Obviously, the above scheme is applied to call up the state that the detergent reservoir in the first order is out of stock when generating an order, and when the detergent reservoir in the first order is in stock, priority is given to placing an order for purchasing the detergent reservoir stored in the first order.

And when the detergent reservoir box in the first order is out of stock, the order should be placed for the same type of detergent reservoir box, then, when purchasing the same type of detergent reservoir box, it should be ensured that the mounting structure of the detergent reservoir box in the order matches the mounting chamber.

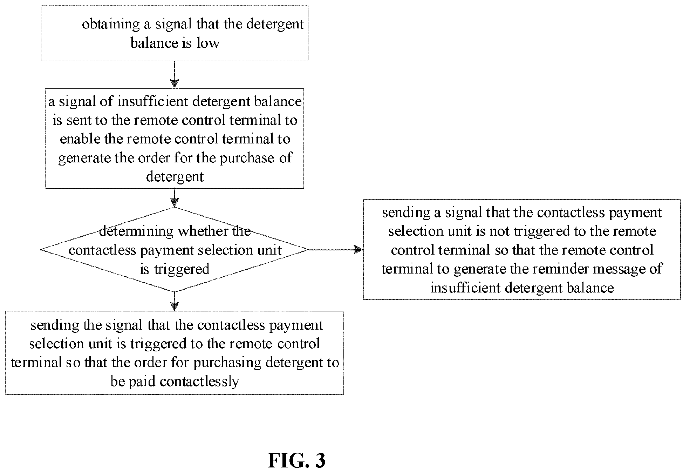

The present disclosure provides a method of controlling a remote-control terminal using a clothing treatment device as described above is executed at the local end of the clothing treatment device, as shown in FIG. 3, and includes the following steps:
obtaining a signal that the detergent balance is low;
sending a signal that the detergent balance is insufficient to the remote-control terminal 200 so that the remote-control terminal 200 to generate an order to purchase detergent;
determining whether the contactless payment selection unit 101 is triggered, if so, sending a signal that the contactless payment selection unit 101 is triggered to the remote-control terminal 200 to enable the generation of an order for purchasing detergent to be paid contactlessly, if not, sending a signal that the contactless payment selection unit 101 is not triggered to the remote-control terminal 200 to enable the remote-control terminal 200 to generate a reminder message that the detergent remaining quantity is insufficient.

In detail, when the remaining amount of detergent in the detergent reservoir in the clothing treatment device 100 is insufficient, for example, when the remaining amount is 5% to 10% of the total amount, a signal that the remaining amount of detergent is insufficient is sent to an APP of the remote-control terminal 200, and the APP of the remote-control terminal 200 generates an order for purchasing detergent automatically after acquiring the signal that the remaining amount of detergent is insufficient. Then, the remote-control terminal 200 sends an instruction to the local terminal of the clothing treatment device 100 to confirm that the contactless payment selection unit 101 has been triggered, and if the contactless payment selection unit 101 has been triggered, the main control board 104 of the clothing treatment device 100 sends the signal that the contactless payment selection unit 101 has been triggered back to the APP of the remote-control terminal 200, and the APP of the remote-control terminal 200, after receiving the signal, automatically pays for the order that has been generated previously without any sensing, whereupon the order is completed and enters into the subsequent process, such as delivery, signing for receipt, and the like.

If the contactless payment selection unit 101 is not triggered, the main control board 104 of the clothing treatment device 100 feeds back the signal that the contactless payment selection unit 101 is not triggered to the APP of the remote-control terminal 200, and when the APP of the remote-control terminal 200 receives this signal, it does not make a payment for the previously generated order, but instead informs the user of the generated order in the form of a reminder message to have the user to manually and autonomously complete the payment.

It is to be noted that the liquid storage box of the clothing treatment equipment 100 is provided with identification labels such as a QR code or an NFC label, so that the user can scan the QR code or touch the NFC label using a cell phone with an NFC recognition function to enter the interface for purchasing detergents when purchasing detergents suitable for the clothing treatment equipment 100 for the first time, the first time the user is required to manually place an order, and the user has to set the delivery address and the contactless payment method after placing the order. After the order is completed, the type of detergent purchased, as well as the delivery address and contactless payment method are stored in the remote-control terminal 200 of the smartphone, tablet, etc. When subsequent orders are generated, the information in the first order can be retrieved to complete the order.

The above is only a preferred embodiment of the present disclosure, and is not a formal limitation of the present disclosure. Although the present disclosure has been disclosed as a preferred embodiment, it is not intended to limit the present disclosure, and any skilled person familiar with the present patent may, without departing from the scope of the technical scheme of the present disclosure, use the technical content of the above mentioned hints to make some changes or modifications for equivalent changes of equivalent embodiments, but any simple modifications and modifications made to the above embodiments based on the technical substance of the present disclosure are still within the scope of the technical scheme of the present disclosure. However, any simple modifications, equivalent changes and modifications made to the above embodiments based on the technical substance of the present disclosure without departing from the content of the technical scheme of the present disclosure are still within the scope of the present disclosure.

## Claims

1. A clothing treatment device **characterized in that** it includes a main control board, a contactless payment selection unit and a communication unit;
the contactless payment selection unit is connected to the main control board for turning on and off a contactless payment function of an APP on the remote-control terminal that controls the clothing treatment device;
the main control board acquires a signal from the contactless payment selection unit to turn on and off the contactless payment function and sends the signal to the remote-control terminal via the communication unit.

2. The clothing treatment device according to claim 1, **characterized in that**: further comprising a control panel, the contactless payment selection unit being provided on the control panel.

3. The clothing treatment device according to claim 2, **characterized in that**: further comprising a display unit for indicating whether the contactless payment selection unit has been triggered;
preferably, the display unit is provided around the contactless payment selection unit.

4. The clothing treatment device according to any one of claims 1-3, **characterized in that**,
the main control board has a function of storing that the contactless payment selection unit has been triggered.

5. The clothing treatment device according to any one of claims 4, **characterized in that**,
the contactless payment selection unit is a button.

6. The clothing treatment device according to any one of claims 1-4, **characterized in that** it further comprises
a detergent automatic delivering device being provided with a detergent reservoir for automatically dispensing detergent into a clothing treatment drum of the clothing treatment device;
a detergent residual detection unit for detecting a detergent residual in the detergent reservoir and the main control board sends a signal of the detergent residual in the detergent reservoir to the remote-control terminal via the communication unit, so as the remote-control terminal to automatically generate an order for purchasing detergent in accordance with the signal of the detergent residual;
when the contactless payment selection unit is triggered, a signal that the contactless payment function is turned on is sent to the remote-control terminal via the communication unit, so that the order for purchasing detergent automatically generated by the remote-control terminal is paid contactlessly; when the contactless payment selection unit is not triggered, a signal that the contactless payment function is turned off is sent to the remote-control terminal via the communication unit, so that the order for purchasing detergent automatically generated order for purchasing detergent cannot be paid contactlessly.

7. A method of controlling the remote-control terminal of the clothing treatment device as claimed in any one of claims 1-6, **characterized in that** it is performed at the remote-control terminal and comprises the following steps:
obtaining a signal that the detergent balance is low;
generating an order to purchase detergent;
obtaining a signal whether the contactless payment selection unit is triggered, if yes, generating an order to purchase detergent with contactless payment, if no, generating a reminder message of insufficient detergent balance.

8. The method of controlling the remote-control terminal of the clothing treatment device according to claim 7, **characterized in that**, generating the order for purchasing detergent comprises the steps:
obtaining a volume of the detergent reservoir in the clothing treatment device, a ratio of a total net content of detergent in the order for purchasing detergent to the volume of the detergent reservoir in the clothing treatment device is in a range of 0.8 to 1.2.

9. The method of controlling the remote-control terminal of the clothing treatment device according to claim 7, **characterized in that**, generating the order for purchasing detergent comprises the following steps:
obtaining a mounting structure of the detergent reservoir in the clothing treatment device, generating the order for purchasing detergent in which the mounting structure of the detergent reservoir matches the mounting structure of the detergent reservoir in the clothing treatment device;
wherein the detergent reservoir in the clothing treatment device is of a single-use type.

10. The method of controlling the remote-control terminal of the clothing treatment device as claimed in any one of claims 1-6, **characterized in that** it is performed at a local end of the clothing treatment device, comprising the steps:
obtaining a signal that the detergent balance is low;
a signal of insufficient detergent balance is sent to the remote-control terminal to enable the remote-control terminal to generate the order for the purchase of detergent;
determining whether the contactless payment selection unit is triggered, if yes, sending the signal that the contactless payment selection unit is triggered to the remote-control terminal so that the order for purchasing detergent to be paid contactlessly, if not, sending a signal that the contactless payment selection unit is not triggered to the remote-control terminal so that the remote-control terminal to generate the reminder message of insufficient detergent balance.
